# EUROPEAN PATENT SPECIFICATION

(11) **EP 0 774 377 B1**
(45) Date of publication and mention of the grant of the patent: **17.05.2000**
(21) Application number: 96203186.0
(22) Date of filing: 14.11.1996
(51) Int. Cl.: B60N 2/48, A47C 31/10

(54) **Headrest cover**
Kopfstützenüberzug
Housse pour appui-tête

(30) Priority: 14.11.1995 NL 1001649
(43) Date of publication of application: 21.05.1997
(73) Proprietor: Otto, Clemens Hendricus Maria, 9403 MH Assen (NL)
(72) Inventor: Otto, Clemens Hendricus Maria, 9403 MH Assen (NL)
(74) Representative: Smulders, Theodorus A.H.J., Ir.

(56) References cited:
- DE-A- 2 419 433
- DE-A- 2 703 866
- DE-A- 4 307 444
- DE-A- 4 337 145
- DE-U- 9 400 352
- DE-U- 9 403 339
- DE-U- 9 412 171
- FR-A- 2 428 538
- GB-A- 1 107 692
- GB-A- 2 168 247
- GB-A- 2 264 438
- US-A- 4 165 125
- US-A- 5 257 853

## Description

The invention relates to a cover according to the preamble of claim 1.

Such a cover is known from Dutch laid-open application 95 00 342. This cover is arranged to receive advertisement carriers and should be closely adapted to the shape of the headrest over which they are to be fitted. This involves that for any type of headrest a specially adapted embodiment of the cover must be used. Furthermore, this known cover does not contribute to increasing the user's safety and comfort.

U.S. patent 4,165,125 discloses a headrest cover pillow intended for supporting the head of a passenger and in particular intended for increasing the comfort of sleeping passengers.

This known headrest cover, too, has the drawback that its shape must be adapted to the shape of the end of the seat back over which it is to be fitted, because otherwise no stable attachment of the cover pillow is obtained.

The object of the invention is to provide a cover which can be fitted over a headrest or a headrest-shaped extension of a seat back, which can be used in combination with headrests and/or headrest-shaped extensions of seat backs of markedly different sizes and shapes, without resulting in an unstable attachment or an unattractive outer appearance of the cover fitted, and which increases the user's comfort and safety.

This object is achieved according to the present invention by performing a cover of the type described in the opening paragraph in accordance with the characterizing steps of claim 1.

Since the cover pillow according to the invention is equipped with a pillow body, it gives a soft support of the head of the user when he rests it against the cover. The pillow body further partially fills the space between the headrest and the head of a user sitting erect, so that in case of an accident the risk of "whiplash" is limited. Since the cover, besides the above-mentioned pillow body, contains a further pillow body or a continuation of the above-mentioned pillow body on the opposite side of the hollow space, the shape and dimensions of the hollow space can largely adapt themselves to the shape and dimensions of the headrest or the headrest-shaped extension of the seat back while retaining the outer shape of the cover pillow. Thus the cover pillow can be fitted firmly enough over a great variety of headrests and headrest-shaped extensions of seat backs, without outer deformation to an unattractive appearance.

The cover pillow according to the invention may be relativy soft and serve in particular as a pillow for supporting the head and preferably also the neck of a passenger, or it may be relatively hard and serve in particular as an enlargement of a headrest for a driver, of which the principal object is the prevention of the so-called "whiplash".

Special embodiments of the present invention are described in the dependent claims.

The invention will hereinafter be described and explained in more detail by means of a practical example most preferred at the moment, with reference to the accompanying drawings, in which:
Fig. 1 is a side view of a driver in a car, a headrest and, fitted over it, a first practical example of a cover according to the invention being shown in cross-section,
Fig. 2 is a top view of a part of a person sitting on a seat provided with a headrest over which is is fitted a cover as shown in Fig. 1, the headrest and the cover fitted over it being shown in cross-section,
Fig. 3 is a side view in cross-section of another headrest with a cover according to a second practical example of the invention,
Fig. 4 is a side view in cross-section of a cover according to a third practical example of the invention, and
Fig. 5 is a perspective view of a seat over the headrest of which is fitted a cover according to a fourth practical example of the invention.

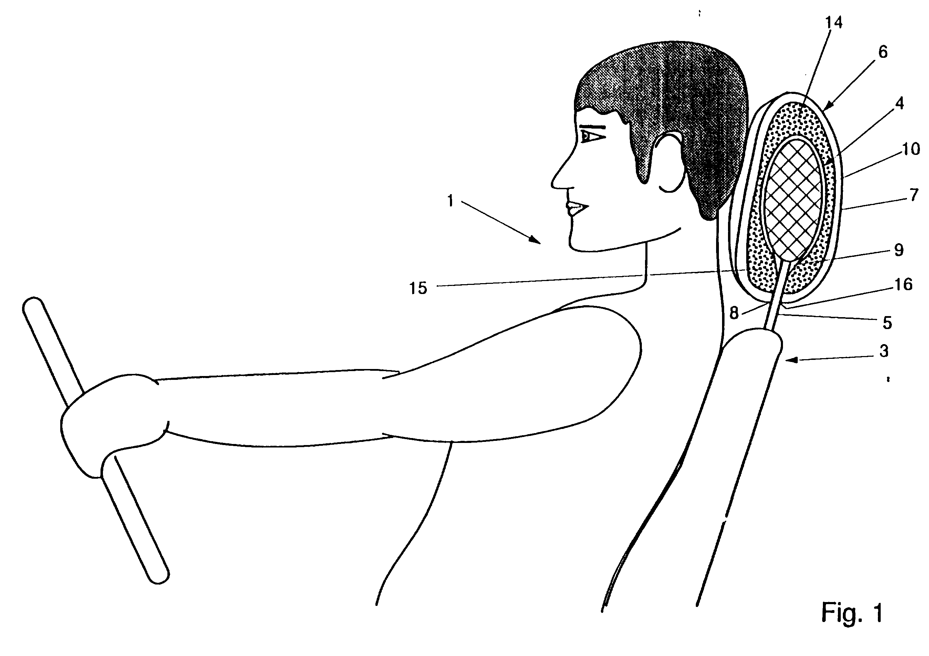

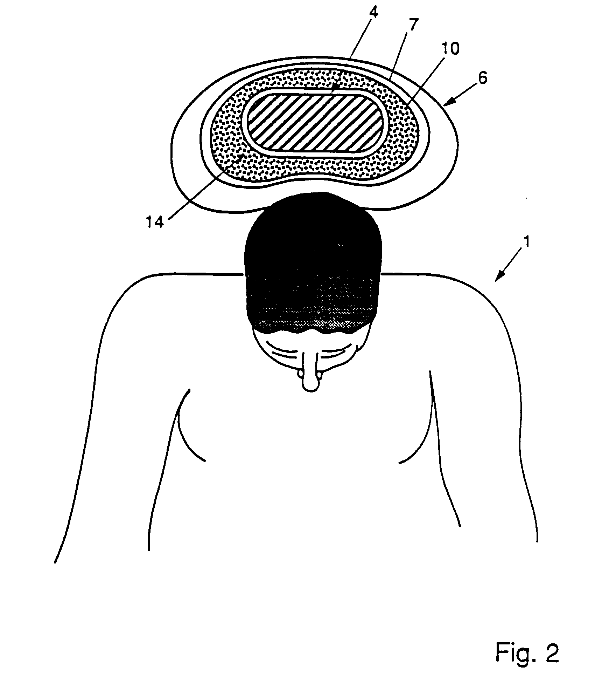

The invention is first described and explained in more detail by means of the most preferred practical example of the invention, shown in Figs. 1 and 2. Subsequently, details of the other covers shown and some further possibilities will be discussed. In the drawings corresponding portions of covers according to different practical examples are denoted by identical reference numerals.

Figs. 1 and 2 show an occupant 1 of a passenger car. The occupant 1 shown is a driver, but could also be a passenger, even though a passenger in general keeps his or her arms more downwards. The driver 1 is sitting on a seat having a seat back 3. Arranged above the seat back 3 is a headrest 4, which headrest is fastened via support legs 5 to the seat back 3, or at least a frame portion thereof.

Although the name of "headrest" suggests that headrests are intended for supporting the head, headrests mounted in cars perform another principal function, namely receiving the head in rear end collisions (head-tail collisions), in backward collisions (e.g. after a skid of 180°), and after a return movement of the body following a collision in the forward direction. By preventing excessive backward movements of the head, the risk of so-called "whiplash" disorders is considerably reduced. In order to be able to properly receive the head, it is of great importance that the headrest 4 at least extends to the upper side of the ears of the occupant 1 and preferably to the upper side of the head. Furthermore, the distance between the back of the head and the headrest should preferably be less than 4 cm.

In a great many cars the headrests cannot be adjusted high enough. Moreover, in many cars the distance between head and headrest cannot be adjusted, with the result that particularly in case of occupants having a long upper part of the body the distance between head and headrest is generally too great. This is illustrated by the headrest 4 shown, the height of which extends just up to the ears of the driver 1 and is positioned too far backwards from the head of the driver 1. There is therefore an urgent need for means for increasing the effective height of a headrest and for limiting the distance between headrest and head. There is also a need for a pillow for enlarging and softening a headrest, so that it can comfortably support the head and preferably also the neck and prevent the head from rolling away when the occupant falls asleep, with the result that it is more comfortable to sleep in the car, the bus, the train, the plane or in another means of transport provided with seats having headrests. In view of the great variety of shapes and sizes of headrests and headrest-shaped extensions of seat backs occurring in practice, it is of great importance that amenities filling the above-described needs can be used in combination with a great variety of headrests and headrest-shaped extensions of seat backs.

Within the described prior condition, the above-described need is filled by means of a cover 6 having an opening 8 at the bottom and, in use, a hollow space 9 connected to the open bottom 8 for including the headrest 4 or a headrest-shaped end of a seat back as well as a pillow body 10 extending on opposite sides of the hollow space 9.

Since the pillow body 10 extends on opposite sides of the hollow space 9, the shape and dimensions of the hollow space 9 can largely adapt themselves to the shape and dimensions of the headrest 4 or the headrest-shaped extension of the seat back, while retaining the outer shape of the cover 6. Thus the cover 6 can be fitted firmly enough over a great variety of headrests and headrest-shaped extensions of seat backs, without outward deformation to an-unattractive appearance. The pillow body 10 need not necessarily extend over the entire surface of opposite sides of the hollow space 9. It may suffice, e.g., to use a pillow body largely positioned in front of the hollow space and connected on the rear side only to portions of the hollow space positioned laterally outwards. Although in that case a central back portion of the cover is not supported by a pillow body, yet it is kept taut between the portions of the pillow body on the rear side of the hollow space 9.

The cover 6 can be easily pulled over a headrest or headrest-shaped end of a seat back.

In the embodiment of Figs. 1 and 2 the pillow body 10 extends in the circumferential direction around the hollow space 9. This results in a very firm suspension of the cover 6 and in a great adaptability to differently shaped and sized headrests or headrest-shaped extensions of seat backs.

As shown in Fig. 2, the principal shape of the cover 6 is oval in horizontal cross-section. This fits in with the commonly used principal shape of headrests and headrest-shaped extensions of seat backs occurring in practice, with the result that the cover can be used in combination with a large number of headrests and headrest-shaped extensions of seat backs occurring in practice.

The total thickness of the cover 6 as shown in Figs. 1 and 2 is larger on one side of the hollow space 9 than on the opposite side of the hollow space 9. Thus it is possible to change the distance between the head of the occupant 1 and the cover 6 by turning the cover 6. Then the original front side of the cover 6 is turned in the backward direction, and the original rear side of the cover 6, which has a different thickness, is provided on the side of the headrest 4 facing the head of the occupant 1.

The pillow body 10 contains a filling 14 of moldable material. This increases the adaptibility of the cover 6 to differently shaped and sized headrests 4 and headrest-shaped extensions of seat backs. Furthermore, by molding the filling 14 the thickness of the filling 14 in the area between the head of the occupant 1 and the headrest 4 can be further adapted.

A moldable filling 14 which is preferably also flexibly compressible, can be obtained, e.g., by using as filling 14 loose elements, such as kapok flakes, balls or shreds of foam material (e.g. polyether or foam rubber), parts or granules of polystyrene foam or mixtures of the above-mentioned materials. Such elastically compressible and moldable fillings can easily become suitable so as to adapt the shape and dimensions of the hollow space 9 to the shape and dimensions of the headrest inserted therein and so as to model the outer shape of the cover and adapt it to personal needs.

The cover shown in Figs. 1 and 2 is further provided with a thickened portion 15 in an area connected to the opening 8. Thanks to this thickened portion 15, there is also provided a receiving and supporting area in the space between the headrest 4 and the upper end of the seat back 3. Thus the neck of the occupant is received in case of a rear end collision, and when the cover is used as a support, improved comfort is obtained thanks to the support of the neck.

The outer side of the cover 6 is formed by a cover 7 removable from the pillow body 10, so that the cover 7 can be easily cleaned and, if necessary, replaced when it is worn out or damaged. A specific pillow body 10 can be combined with a large number of cover upholsteries different as regards color, material, pattern, and the like. This renders it possible to offer, from stock, covers in a great variety, without the necessity to keep in stock a correspondingly large amount of relatively voluminous pillow bodies.

The cover 7 is provided with an elastic tape 16 around the opening 8, so that the opening is kept relatively small after positioning and the pillow body 10 is prevented from protruding from the cover 7. Of course, the opening 8 may also be closed in a different way, e.g. by means of Velcro, buttons or a zipper.

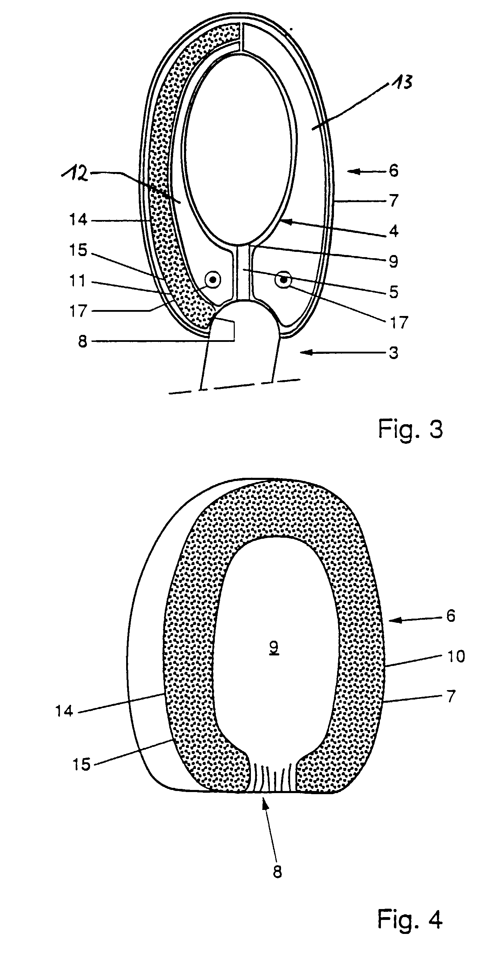

The cover 6 shown in Fig. 3 is provided with two pillow bodies 12, 13, which are circumferentally distributed around the hollow space 9 as well as with an additional pillow 11, which abuts on one of the pillows 12, 13. Because the cover 6 is provided with several pillow bodies 11, 12, 13, there can be obtained, even when using relatively stiff fillings, a precise adaptation of the shape and dimensions of the hollow space 9 to the shape and dimensions of the headrest or the headrest-shaped end of a seat back and to the personal need of the occupant. On the other hand, the positioning of the cover requires a little more attention than the positioning of a cover with a single pillow body.

The pillow bodies 12, 13 are air bags, so that there is obtained an excellent adaptation of the shape of the hollow space to the shape of the headrest 4. When receiving the head of an occupant, an air bag shows relatively little damping effect, so that the head, after having been received, would rebound, so to speak. This would also involve a considerable risk of neck injury. In order yet to obtain a sufficient damping effect, the above-mentioned additional pillow 11, which is filled with a filling of damping material, e.g. polystyrene foam, is arranged on the outside of the air bag 12. If required, the pillows 12, 13 may be provided with weakened portions, through which at very high pressure air can escape, so that in case of a collision an occupant's head received is further prevented from rebounding.

The pillows 12, 13 are provided with closable filling nipples 17. This renders it possible first to position the cover 6 over the headrest or the headrest-shaped end of a seat back and then to inflate the air bags 12, 13, until the cover is fixed firmly around the headrest or the headrest-shaped end of a seat back. By adjusting the distribution of the air over the air bags 12, 13, the distance from the cover 6 to the head of the occupant 1 can be adjusted.

Besides the above-mentioned fillings, many other fillings may be used. The head and the neck of an occupant may be very uniformly received and supported, e.g., when the cover is provided with a pillow body having a filling of gel-like material. It is also possible to fill the pillow body or one or more pillow bodies, after positioning of the cover, with a liquid material which then merges into a solid form, such as silicone material or polyurethane foam.

Fig. 4 shows a very simple embodiment of a cover according to the invention. This cover is primarily meant as a support for the head of sleeping and resting persons. The cover 7 and the pillow body 10 form one integrated part, which is cost-reducing in comparison with the above-discussed embodiments. The filling 14 consists of a relatively loose and soft material and is relatively voluminous, so that there is obtained excellent conformity with respect to the supported head. The filling used for such a pillow is preferably a filling which approximately corresponds to the filling of pillows intended for the bedroom. This means that natural materials, such as feathers and wool, may also be used.

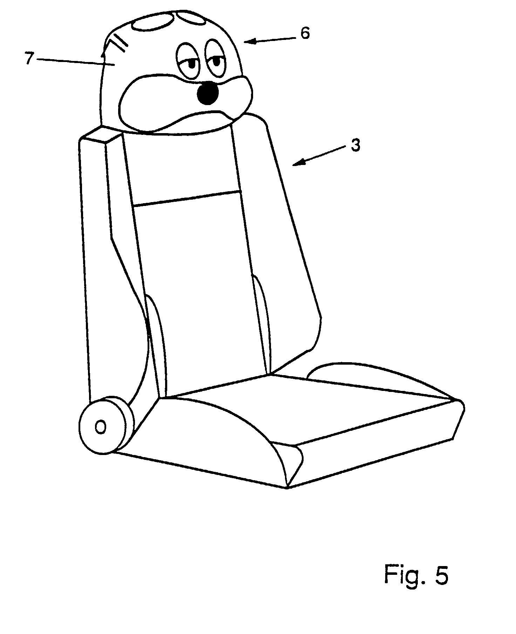

A special advantage of the cover according to the invention is that there is great freedom of design of the exterior. This renders it possible to use the cover 6 for promotion purposes (e.g. in the form of a beer tin) or to give the cover 6 another special shape, e.g. the shape of the head of a comic character or of a well-known person (in a caricatural form) or the shape of a football. In the example shown in Fig. 5 the cover is a stylized head of a cat with eyes, a nose and ears.

## Claims

1. A cover adapted to be fitted over a headrest or a headrest-shaped end of a seat back, comprising a lower side provided with an opening (8) and, in use, a hollow space (9) connected to the opening (8) for including a headrest (4) or a headrest-shaped end of a seat back, characterized by a pillow body (10, 11, 12) on one side of the hollow space (9) and a further pillow body (13) or a continuation of said pillow body (10) on the opposite side of the hollow space (9).

2. A cover according to claim 1, wherein at least one pillow body (10) extends circumferentially around the hollow space (9).

3. A cover according to claim 1, wherein at least two pillow bodies (11, 12, 13) are distributed circumferentially around the hollow space (9).

4. A cover according to claim 1, wherein the total thickness is larger on one side of the hollow space (9) than on the opposite side of the hollow space (9).

5. A cover according to any of the preceding claims, wherein at least one pillow body (10, 11) contains a filling of moldable material.

6. A cover according to any of the preceding claims, wherein at least one pillow body (10, 11) contains a filling of loose particles.

7. A cover according to any of the preceding claims, wherein at least one pillow body (12, 13) is an air bag.

8. A cover according to any of the preceding claims, wherein the pillow body or at least one of the pillow bodies (12, 13) is provided with a filling nipple.

9. A cover according to any of the preceding claims, wherein at least one pillow body contains a filling of gel-like material.

10. A cover according to any of the preceding claims, further comprising a thickened portion (15) in an area connected to the opening (8).

11. A cover according to any of the preceding claims, further comprising a cover (7) removable from the pillow body (10) or the pillow bodies (11, 12, 13).

12. A cover according to any of the preceding claims, of which the principal shape is oval in horizontal cross-section.

13. A cover according to any of the preceding claims, of which the design resembles an object other than a headrest.

## Patentansprüche

1. Überzug zur passenden Anbringung an einer Kopfstütze oder einem kopfstützenförmigen Ende einer Rückenlehne, mit einer unteren Seite, die mit einer Öffnung (8) versehen ist, und, bei Benutzung, einem mit der Öffnung (8) verbundenen Hohlraum (9) zur Aufnahme einer Kopfstütze (4) oder eines kopfstützenförmigen Endes einer Rückenlehne,
gekennzeichnet durch einen Polsterkörper (10,11,12) an einer Seite des Hohlraums (9) und einen weiteren Polsterkörper (13) oder eine Fortsetzung des Polsterkörpers (10) an der gegenüberliegenden Seite des Hohlraums (9).

2. Überzug nach Anspruch 1, bei dem sich mindestens ein Polsterkörper (10) umfangsmäßig um den Hohlraum (9) herum erstreckt.

3. Überzug nach Anspruch 1, bei dem mindestens zwei Polsterkörper (11,12,13) umfangsmäßig um den Hohlraum (9) herum verteilt sind.

4. Überzug nach Anspruch 1, bei dem die Gesamtdicke an einer Seite des Hohlraums (9) größer ist als an der gegenüberliegenden Seite des Hohlraums (9).

5. Überzug nach einem der vorhergehenden Ansprüche, bei dem mindestens ein Polsterkörper (10,11) eine Füllung aus formbarem Material enthält.

6. Überzug nach einem der vorhergehenden Ansprüche, bei dem mindestens ein Polsterkörper (10,11) eine Füllung aus losen Partikeln enthält.

7. Überzug nach einem der vorhergehenden Ansprüche, bei dem mindestens ein Polsterkörper (12,13) ein Airbag ist.

8. Überzug nach einem der vorhergehenden Ansprüche, bei dem der Polsterkörper oder mindestens einer der Polsterkörper (12,13) mit einem Füllstutzen versehen ist.

9. Überzug nach einem der vorhergehenden Ansprüche, bei dem mindestens einer der Polsterkörper eine Füllung aus gelartigem Material enthält.

10. Überzug nach einem der vorhergehenden Ansprüche, ferner mit einem verdickten Teil (15) in einem mit der Öffnung (8) verbundenen Bereich.

11. Überzug nach einem der vorhergehenden Ansprüche, ferner mit einem von dem Polsterkörper (10) oder den Polsterkörpern (11,12,13) abnehmbaren Überzug.

12. Überzug nach einem der vorhergehenden Ansprüche, bei dem die Grundform im horizontalen Querschnitt oval ist.

13. Überzug nach einem der vorhergehenden Ansprüche, bei dem das Design einem anderen Gegenstand als einer Kopfstütze entspricht.

## Revendications

1. Housse destinée à être montée sur un appuie-tête ou une extrémité en forme d'appui-tête d'un dossier de siège, comprenant une face inférieure ayant une ouverture (8) et, pendant l'utilisation, un espace (9) relié à l'ouverture (8) pour l'incorporation d'un appuie-tête (4) ou d'une extrémité en forme d'appuie-tête d'un dossier de siège, caractérisée par un corps de coussin (10, 11, 12) placé d'un premier côté dudit espace (9) et un corps supplémentaire de coussin (13) ou un prolongement du corps de coussin (10) placé du côté opposé dudit espace (9).

2. Housse selon la revendication 1, dans laquelle un corps de coussin au moins (10) s'étend circonférentiellement autour dudit espace (9).

3. Housse selon la revendication 1, dans laquelle deux corps de coussin (11, 12, 13) sont répartis circonférentiellement autour dudit espace (9).

4. Housse selon la revendication 1, dans laquelle l'épaisseur totale d'un côté dudit espace (9) est supérieure à celle du côté opposé de cet espace (9).

5. Housse selon l'une quelconque des revendications précédentes, dans laquelle un corps de coussin au moins (10, 11) comprend une garniture d'un matériau moulable.

6. Housse selon l'une quelconque des revendications précédentes, dans laquelle un corps de coussin au moins (10, 11) contient une garniture de particules fluides.

7. Housse selon l'une quelconque des revendications précédentes, dans laquelle un corps de coussin au moins (12, 13) est un sac pneumatique.

8. Housse selon l'une quelconque des revendications précédentes, dans laquelle le corps de coussin ou l'un au moins des corps de coussin (12, 13) comporte un embout de remplissage.

9. Housse selon l'une quelconque des revendications précédentes, dans laquelle un corps de coussin au moins comprend une garniture d'un matériau analogue à un gel.

10. Housse selon l'une quelconque des revendications précédentes, comprenant en outre une partie épaissie (15) dans une région reliée à l'ouverture (8).

11. Housse selon l'une quelconque des revendications précédentes, comprenant en outre une housse (7) amovible qui peut être séparée du corps (10) ou des corps (11, 12, 13) de coussin.

12. Housse selon l'une quelconque des revendications précédentes, dont la forme principale est ovale en coupe horizontale.

13. Housse selon l'une quelconque des revendications précédentes, dont le dessin ressemble à un objet autre qu'un appuie-tête.
